(19) **Europäisches Patentamt**

**European Patent Office**

**Office européen des brevets**

(11) **EP 0 709 760 B1**

(12) **EUROPEAN PATENT SPECIFICATION**

(45) Date of publication and mention
of the grant of the patent:
**31.05.2006 Bulletin 2006/22**

(51) Int Cl.:
*G06F 1/00* *(2006.01)*       *G06F 12/14* *(2006.01)*

(21) Application number: **95116820.2**

(22) Date of filing: **25.10.1995**

(54) **Data copyright management system**

Urheberrechtsdatenverwaltungssystem

Système de gestion de données de droits d'auteurs

(84) Designated Contracting States:
**DE FR GB**

(30) Priority: **27.10.1994 JP 26420194**

(43) Date of publication of application:
**01.05.1996 Bulletin 1996/18**

(73) Proprietor: **Intarsia Software LLC
Las Vegas,
Nevada 89119 (US)**

(72) Inventors:
• **Saito, Makoto
Tokyo (JP)**
• **Momiki, Shunichi
Tokyo (JP)**

(74) Representative: **Heselberger, Johannes
Patent- und Rechtsanwälte
Bardehle . Pagenberg . Dost .
Altenburg . Geissler
Galileiplatz 1
81679 München (DE)**

(56) References cited:
**EP-A- 0 704 785          US-A- 5 291 598**

• **LEIN HARN ET AL: "A SOFTWARE
AUTHENTICATION SYSTEM FOR INFORMATION
INTEGRITY" COMPUTERS & SECURITY
INTERNATIONAL JOURNAL DEVOTED TO THE
STUDY OF TECHNICAL AND FINANCIAL
ASPECTS OF COMPUTER SECURITY, vol. 11, no.
8, 1 December 1992, pages 747-752, XP000332279**
• **SCHNEIER B.: 'Applied Cryptography, Protocols,
Algorithms and Source Code in C', 31 January
1994, JOHN WILEY & SONS, USA * page 31 * *
page 42 - page 43 ***

EP 0 709 760 B1

**Description**

Field of the Invention

The present invention relates to a system for managing the copyright for the use of digital data, that is, the display, storage, copying, edition, and transmission of such data, which is particularly applicable to a multimedia system.

Background of the Invention

As more and more information is available, database systems wherein many computers, which independently stored various data, are connected via communication lines to use the data mutually are becowing increasingly popular.

Such database systems has been so far possible to process only coded information containing a small amount of information which can be processed by conventional computers and at the most monochrome binary data such as facsimile information, and failing to handle natural and moving pictures that include a substantially large amount of information.

Digital processing techniques for various electric signals are being developed, and efforts are being made to apply such techniques to those dynamic picture signals other than binary data which were processed as analog signals.

Since the digitalization of picture signals enables picture signals such as television signals to be handled by computers, people are viewing as a promising technique a "multimedia system" that can deal with both various data that can be processed by computers and picture data that is digitalized picture signals.

Since picture data contains a significantly larger amount of information than character data or audio data, it cannot be stored, transmitted, or subjected to various processings by computers in its original form.

Attempts have thus been made to compression/expansion picture data, and some picture data compression/expansion standards have been prepared. These standards include the following common standards: the Joint Photographic Image Coding Experts Group (JPEG) standards for still pictures, the H. 261 standards for video conferences, the Moving Picture Image Coding Experts Group 1 (MPEGI) standards for picture storage, and the MPEG2 standards for both existing television broadcasting and future high-precision television broadcasting.

These techniques have enabled digital picture data to be processed in real time.

Since analog data, which is conventionally popular, is degraded each time at is stored, copied, edited, and transmitted, little notice has been taken of the control of the copyright associated with these operations. Digital data, however, is not degraded after repeated storage, copying, edition, and transmission, such control is significant.

There has been no adequate method for controlling the copyright for digital data; the copyright is managed based on the copyright law or relevant contracts. The copyright law simply establishes a compensation system for digital recording equipment.

A database not only has its contents referenced but is also used to effectively use data obtained through storing, copying, and edition and transfer edited data to a different user through copying or transmission, or to receive and register new data to a database.

Although conventional databases have dealt with only character data, databases in multimedia system contain audio and picture data that is inherently analog, in addition to character data.

Under these circumstances, the control of the copyright for data in databases is very important, but no copyright management means that is particularly applicable to secondary use such as copying, edition, and transmission has been completed.

The inventors have proposed in Japanese Patent Application 1994-46419 and Japanese Patent Application 1994-141004 a system for managing the copyright by forcing the user to acquire a permit key from the key control center through a public telephone line, and in Japanese Patent Application 1994-132916 an apparatus for this purpose.

By improving these inventions, the inventors have also proposed in Japanese Patent Application 1994-64889 a copyright management method applicable to both the primary use of a database system such as the display (including audio output) and storage of digital data and the secondary use such as copying, edition, and transmission, including the realtime transmission of digital picture.

To manage the copyright for a database system this database copyright management method uses in the database system a program and copyright information required to manage the copyright in addition to a key for permitting to use which is transmitted to the user.

The copyright management program watches and manages to prevent users from using other than the conditions of users' request or permission.

The inventors have also proposed in Japanese Patent Application 1994-237673 a database copyright management system for specifically implementing the database copyright management method proposed in Japanese Patent Application 1994-64889 described above.

The system proposed in Japanese Patent Application 1994-237673 comprises a key management center that manages a crypt key K and a copyright management center that manages the database copyright. According to this system, all the data delivered from a database is encrypted by a first crypt key K1, and a primary user who wishes to uses data directly from the database requests the key management center for the key K corresponding to the specific usage by presenting information 11 on the user to the center. In response to the primary usage request from the primary user, the key management center transfers the information 11 on the user to the copyright management center. On receiving the information 11, the copyright management center transfers this information 11 with a copyright management program Pc to the key control center. On receiving the copyright management program Pc, the key control center transfers the first crypt key K1 and a second crypt key K2 corresponding to the specific usage together with the copyright management program Pc to the primary user via a communication network. On receiving the first crypt key K1. the primary user uses this key to decrypt the data. The user subsequently uses the second crypt key K2 to encrypt and decrypt data when storing, copying or transmitting the data.

In cryptographic techniques, the use of the crypt key K to encrypt a plaintext M to obtain a cryptogram C is expressed as:

$$C = E\ (K,\ M)$$

while the use of the crypt key K to decrypt the cryptogram C to obtain the plaintext M is expressed as:

$$M = D\ (K,\ C).$$

These expressions are used hereafter in this specification,

If data is copied to an external record medium or transmitted without being stored, the first and second crypt keys K1 and K2 are disued. If the primary user wishes to use the data again, the first and second crypt keys K1 and K2 are re-delivered to the user from the copyright management center. The redelivery of the second crypt key K2 indicates a confirmation that the data has been copied or transferred to a secondary user, and this is recorded in the copyright management center.

In requesting a secondary usage to the copyright management center the secondary user presents the information 11 on the primary user and information 10 on the original copyright to the copyright management center.

The copyright management center transmits to the secondary user a permit key Kp corresponding to the specific usage with a second crypt key K2 (viewing permit key), a third crypt key K3 (a permit key corresponding to the specific usage), and the copyright management program Pc which have been encrypted.

Typical means used for encrypting data include secret-key cryptosystem and public-key cryptosystem.

The secret-key cryptosystem uses the same secret crypt key Ks for both encryption and decryption:

$$CmKs = E\ (Ks,\ M)$$

$$M = D\ (Ks,\ Cmks).$$

In the public-key crypt system, a key for encryption is open as a public-key, while a key for decryption is not open and is called a private-key. To use this cryptosystem an information provider encrypts using the public-key Kb for a receiver

$$Cmkb = E(Kb,\ M),$$

while the receiver receiving the encrypted data decrypts it using the private-key Kv that is not open

$$M = D\ (Kv,\ Cmkb).$$

In the application submitted simultaneously with this application, the inventors have proposed an invention that employs a first public-key Kb1, a first private-key Kv1 corresponding to the first public-key Kb1, a second public-key Kb2S. and a second private-key Kv2 corresponding to the second public-key Kb2 which are prepared by the user, and a first secret-key Ks1 and a second secret-key Ks2 prepared by the database. The database uses the first secret-key Ks1 to encrypt data M

$$Cmks1 = E\ (Ks1,\ M)$$

and further encrypts the firstsecret-keys Ks1 by the first public-key Kb1

$$Cks1kb1 = E\ (Kb1,\ Ks1)$$

and encrypts the second secret-key Ks2 by the second public-key Kb2

$$Cks2kb2 = E\ (Kb2,\ Ks2);$$

the database then transmits these encrypted data Cmks1 and the first and the second secret-keys CKs1 and Cks2kb2 to the user;

the user decrypts the first secret-key Ckslkb1 using the first private-key Kv1

$$Ks1 = D (Kv1, Cks1kb1),$$

and decrypts the encrypted data Cmks1 to use by decrypted first secret-key Ks1

$$M = D (Ks1, Cmks1),$$

and the encrypted second secret-key Cks2kb2 by the second private-key Kv2

$$Ks2 = D (Kv2, Cks2kb2);$$

and decrypted second secret-key Ks2 is used for data storage/copy/transfaer after data decryption.

In the textbook, Applied Cryptography Protocols, Algorithms and Source Code in C, Bruce Schneier, John Wiley & Sons Inc., January 1994, page 31, 42-43, a hybrid cryptosystem is described, in which a first user (e.g. a database) sends a first secret key encrypted using a second users public key to the second user. The second user decrypts this encrypted first key using his private key and both of them encrypt their communication using the same first secret key.

This hybrid cryptosystem does not disclose the first user (e.g. the database) sending an encrypted further secret key to the second user, who after decrypting it uses the further secret key to re-encrypt decrypted encrypted data received from the first user (e.g. the database).

SUMMARY OF THE INVENTION

The database copyright management system proposed in Japanese Patent

Application 1994-237673 assumes that a single data or database is used in the system, and not that a plurality of data or databases are edited to produce new data.

The inventors thus proposes in this application a data copyright management system according to claim 1 assuming that a plurality of data or databases are edited to produce new data.

The secondary user who receives the second crypt key decrypts encrypted secondary data using the second crypt key to use it.

BRIEF DESCRIPTION OF THE DRAWINGS

Figure 1 is a block diagram of an embodiment of a data copyright management system according to this invention.

Figure 2 is an example illustrating of producing new copyrighted data using a plurality of copyrighted data as objects.

DETAILED DESCRIPTION OF THE PREFERRED EMBODIMENT

An embodiment of this invention is described with reference to the drawings.

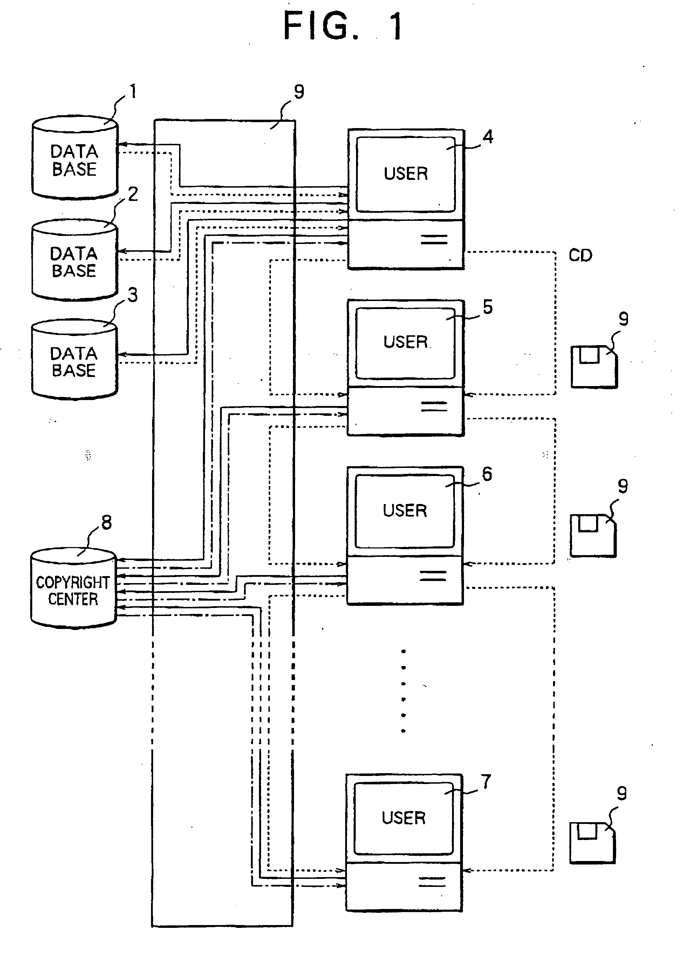

Figure 1 shows a block diagram of a data copyright management system according to this invention. The data stored in the database in this system is not encrypted.

In addition to databases, the embodiment in Japanese Patent Application 1994-237673 uses satellite broadcasting or a storage medium as a means for supplying data. In the embodiment shown in this application, however, only databases are shown as a means for supplying data for the convenience of explanation. Of course, however, this invention is applicable to the use of satellite, terrestorial wave or CATV broadcasting that is free due to advertisement and the like and this does not require encryption, or a record medium as well as databases as a means for supplying data.

If a primary user copies data obtained and then supplies it to a secondary user, the data does not involve the copyright of the primary user because no modifications have not been made to the data. If, however, the primary user produces new data based on the data obtained or using a means for combining the original data with other data, the new data involves a secondary exploitation for the primary user.

Similarly, if the secondary user produces new data based on the data obtained from the primary user or using a means for combining the original data with other data, the new data involves a secondary copyright as secondary exploitation right for the secondary user.

In the embodiment shown in the figure, reference numerals 1, 2, and 3 designate databases that store text data or binary, audio, and/or picture data constituting computer graphics screens or programs, the data which is not encrypted; 9 is a communication line such as a public telephone line provided by a communication enterprise or a CATV line provided by a cable television enterprise; 4 is a primary user terminal; 5 is a secondary user terminal; 6 is a tertiary user terminal; and 7 is an n-th user terminal device. In addition, reference numeral 8 designates a copyright management center for managing the data copyright.

The databases 1, 2, and 3, copyright management center 8. primary user terminal 4, secondary user terminal 5, tertiary user terminal 6, and n-th user terminal 7 are connected to a communication line 9.

In this figure, encrypted data is transmitted via the path shown by a broken line, requests are transmitted from the user terminal 4, 5, 6, or 7 to the database 1, 2, or 3 and the copyright management center 8 via the path shown by a solid line the permit key, copyright management program, and crypt key corresponding to a specific usage are transmitted from the database 1, 2, or 3 and the copyright management center 8 to the user terminal 4, 5, 6, or 7 via the path shown by an one-dot chain line.

This embodiment employs a first public-key Kb1, a first private-key Kv1 corresponding to the first public-key Kb1, a second public-key Kb2, and a second private-key Kv2 corresponding to the second public-key Kb2 which are prepared by the user, and a first secret-key Ks1 and a second secret-key Ks2 prepared by the database. The database uses the first secret-key Ks1 to encrypt data M

$$Cmks1 = E (Ks1, M)$$

and further encrypts the first secret-key Ks1 by the first public-key Hb1

$$Cks1kb1 = E (Kb1, Ks1)$$

and the second secret-key Ks2 by the second public-key Kb2

$$CKs2kb2 = E (Kb2, Ks2).$$

The database then transmits these encrypted data Cmks1 and the first and the second secret-keys Cks1kb1 and Kcs2kb2 to the user.

The user decrypts the encrypted first secret-key Cks1kb1 using the first private-key Kv1

$$Ks1 = D (Kv1, CKs1kb1),$$

and decrypts the encrypted data Cmks1 by the decrypted first secret-key Ks1

$$M = D (Ks1, Cmks1)$$

and use it. And further, the user decrypts encrypted second secret-key Cks2kb2. by the second private-key Kv2

$$Ks2 = D (Kv2, Cks2kb2),$$

which is subsequently used as a crypt key for storing, copying, or transmitting data.

If a primary user 4 copies data obtained and then supplies it to a secondary user 5, the data does not involve the copyright of the primary user 4 because no modifications have not been made to the data. If, however, the primary user 4 produces new data based on the data obtained or using a means for combining the original data with other data, the new data involves a secondary exploitation right for the primary user 4, and the primary user 4 has the original copyright for this secondary work.

Similarly, if the secondary user 5 produces new data based on the data obtained from the primary user 4 or combining with other data, the new data involves a secondary exploitation right for the secondary user 5, and the secondary user 5 has the original copyright of this secondary work.

The databases 1, 2, and 3 store text data or binary, digital audio, or digital picture data constituting computer graphics screens or programs, the data which is not encrypted. This data is encrypted and supplied to the user terminal 4 via the communication line 8 during a data reading operation in response to a request from the primary user terminal 4.

The data copyright obtained from the database is managed by the method described in Japanese Patent Application 1994-237673 or in the application submitted simultaneously with this application.

A summary of the applications proposed by the inventors of this invention are shown below.

Both the secret-key and public-key cryptosystems are adopted as crypt methods. Although the use of the public-key cryptosystem in the encryption of data improves the security of encrypted data, the encryption of data containing a large amount of information using the same system requires a significantly long time for decryption and is not practical.

The amount of information contained in crypt keys, however, is not so large as that in data because such keys must be operated by human beings.

This copyright management system employs a first public-key Kb1, a first private-key Kv1 corresponding to the first public-key Kb1, a second public-key Kb2, and a second private-key Kv2 corresponding to the second public-key Kb2 which are prepared by the user, and a first and a second secret-keys Ks1, Ks2 prepared by the database.

The database uses the first secret-key Ks1 to encrypt data M

$$Cmks1 = E (Ks1, M)$$

and further encrypts the first secret-key Ks1 using the first public-key Kb1

$$Cks1kb1 = E (Kb1, Ks1)$$

and the second secret-key Ks2 using the second public-key Kb2

$$Cks2Kb2 = E (Kb2, Ks2).$$

The database then transmits these encrypted data and first and second secret-keys Cks1kb1, Cks2kb2 to the user.

The user decrypts the encrypted first secret-key Cks1kb1 using the first private-key Kv1

$$Ks1 = D (Kv1, Cks1kb1),$$

and decrypts the encrypted data Cmks1 using the decrypted first secret-key Ks1

$$M = D (Ks1, Cmks1)$$

to use it, and decrypts the encrypted second secret-key Cks2kb2 by the second private-key Kv2 which is to be used in subsequent storing, copying or transmitting decrypted data.

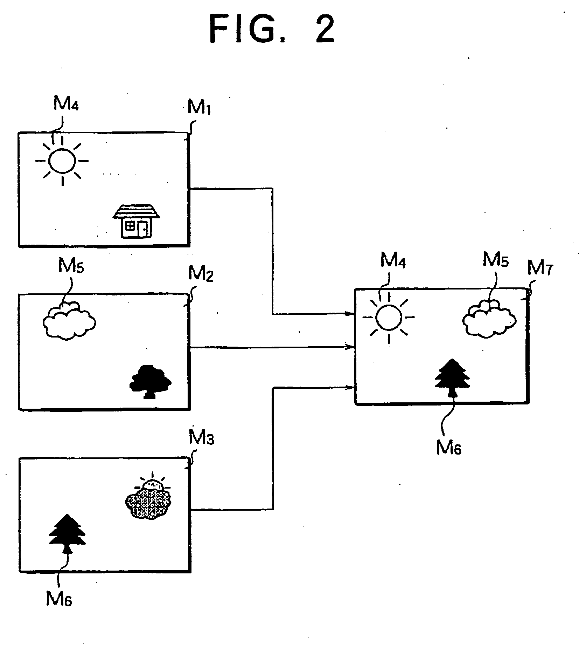

The edition of a plurality of data to produce new data is described with reference to Figure 2.

As shown in this figure, the primary user 4 extracts parts M4, M5 and M6 constituting data from a plurality of data M1, M2 and M3 obtained from one or more databases, and produces new data M7 from these parts M4, M5 and M6.

The primary user 4 supplies the new data M7 to the secondary user 5; the new data M7 involves a secondary coyright associated with the edition of original data M1, M2 and M3 as well as the original copyright for the original data M1, M2 and M3 from which the parts M4, M5 and M6 produces new data M7.

The original data M1, M2 and M3 are encrypted using the second secret-key Ks2 supplied with each of data M1, M2 and M3 when used for operation other than display; i.e.. storage, edition, copying or transmission:

$$Cm1ks2 = E (Ks2, M1)$$

$$Cm2ks2 = E (Ks2, M2)$$

$$Cm3ks2 = E (Ks2, M3).$$

The data M4, M5 and M6, parts of original data are also encrypted using the second secret-key Ks2 supplied with each data when used for operation other than display:

$$Cm4ks2 = E (Ks2, M1)$$

$$Cm5ks2 = E (Ks2, M2)$$

$$Cm6ks2 = E (Ks2, M3).$$

The new data comprises the original data and the process that the data has been edited.

In the computer technology, the edition of data is represented by original data and an edition process for it. Furthermore, the original data and edition process can be represented by a computer program and the data written in the computer program. The program and data that have been an entire unit are referred to as "object", and the computer processing about objects is called an object-oriented technology, which has recently become most popular among the computer technologies.

The technique for producing new data from a plurality of data parts is called a frame work or scenario; the "Object Linking and Embedding" (OLE) program from Microsoft Corp. and "OpenDoc" from Apple Computer Inc. are typical examples.

This invention treats as objects the relationship between original data parts and a frame work or scenario constituting an edition process in addition to the original data parts.

The primary user 4 who has edited the data provides a digital signature for edition program Pe using first Private-key

$$Spe = D (Kv1, Pe)$$

and supplies encrypted original data parts Cm4ks2, Cm5ks2 and Cm6ks2 to secondary user 5 together with the edition program Pe with digital signature.

Upon receipt of the encrypted original data parts Cm4ks2, Cm5ks2 and Cm6ks2. and the edition program Pe, the secondary user 5 requests second secret-key Ks2 for decryption of the encrypted original data parts Cm4ks2, Cm5ks2 and Cm6ks2 to the copyright management center 8, by presenting the edition program Pe with digital signature.

The data copyright management center 8 identifies the primary user 4 from the presented digital signature in the edition program Pe, using first public-key Kb1

$$Pe = E (Kb1, Spe).$$

and determines if the primary user 4 is a valid user to use the original data to which the second secret-key Ks2 that has been requested corresponds. If the primary user 4 is a valid user, the copyright management center transmits the second secret-key Ks2 to the secondary user 5. Otherwise, it does not transmit the second secret-key Ks2 to the secondary user 5.

The digital signature Spe presented to the copyright management center 8 is registered in the center as a valid procedure for authorizing secondary copyright owner.

This system may limit appropriate n-order usage according to determination in practice by the database or original copyright owner, not permanetly repated usage from primary use till n-order use, and may make data which has been used certain-order be registered as next original data.

## Claims

1. A data copyright management method comprising:

supplying from a database (1, 2, 3, 11) an encrypted plurality of original data encrypted by using a first secret-key for each original data of the plurality of original data to a primary user terminal (4);
supplying from said data base the encrypted first secret-key for each of the original data to the primary user terminal (4);
decrypting by the primary user terminal (4) the encrypted first secret-key using a first private key;
decrypting the encrypted plurality of original data by the primary user terminal (4) using the decrypted first secret-key for each of the original data to produce a decrypted plurality of original data;
producing a plurality of edited data by the primary user terminal (4) as a combination of editing process data and the decrypted plurality of original data, the edited data involving a secondary copyright for the primary user terminal (4) associated with the edition of the original data;
supplying from said data base an encrypted further secret-key for each of the plurality of edited data to the primary user terminal (4);
decrypting by said user terminal (4) the encrypted further secret-key using a second private key; and

encrypting the plurality of edited data using the decrypted further secret-key for each edited data of the plurality of edited data before storing, copying and transferring the plurality of edited data.

## Patentansprüche

1. Verfahren zum Daten-Copyright-Management, aufweisend:

Liefern einer verschlüsselten Mehrzahl von Originaldaten, die durch Verwendung eines ersten geheimen Schlüssels für jede der Originaldaten der Mehrzahl von Originaldaten verschlüsselt wurden, von einer Datenbank (1, 2, 3, 11) an ein primäres Nutzerterminal (4);
Liefern des verschlüsselten ersten geheimen Schlüssels für jede der Originaldaten von der Datenbank an das primäre Nutzerterminal (4);
Entschlüsseln des verschlüsselten geheimen Schlüssels durch Verwenden eines ersten privaten Schlüssels durch das primäre Nutzerterminal (4);
Entschlüsseln der verschlüsselten Mehrzahl von Originaldaten durch das primäre Nutzerterminal (4) durch Verwendung des entschlüsselten ersten geheimen Schlüssels für jede der Originaldaten, um eine entschlüsselte Mehrzahl von Originaldaten zu erzeugen;
Erzeugen einer Mehrzahl von editierten Daten durch das primäre Nutzerterminal (4) als eine Kombination des Editierens von Prozessdaten und der entschlüsselten Mehrzahl von Originaldaten, wobei die editierten Daten ein sekundäres Copyright für das primäre Nutzerterminal (4) umfassen, das mit dem Editieren der Originaldaten zugeordnet ist;
Liefern eines verschlüsselten weiteren geheimen Schlüssels für jede der Mehrzahl von editierten Daten von der Datenbank an das primäre Nutzerterminal (4);
Entschlüsseln des verschlüsselten weiteren geheimen Schlüssels durch das Nutzerterminal (4) durch Verwenden eines zweiten privaten Schlüssels; und
Verschlüsseln der Mehrzahl von editierten Daten durch Verwendung des entschlüsselten weiteren geheimen Schlüssels für jede der editierten Daten der Mehrzahl von editierten Daten vor dem Speichern, Kopieren und Übertragen der Mehrzahl von editierten Daten.

## Revendications

1. Procédé de gestion de droits d'auteur sur des données, comprenant :

l'envoi, à partir d'une base de données (1, 2, 3, 11), d'une pluralité cryptée de données originelles cryptées en utilisant une première clé secrète pour chaque donnée originelle de la pluralité de données originelles, à un terminal d'utilisateur primaire (4) ;

l'envoi, à partir de ladite base de données, de la première clé secrète cryptée pour chacune des données originales au terminal d'utilisateur primaire (4) ;

le décryptage, par le terminal d'utilisateur primaire (4), de la première clé secrète cryptée en utilisant une première clé privée ;

le décryptage de la pluralité cryptée de données originelles par le terminal d'utilisateur primaire (4) en utilisant la première clé secrète décryptée pour chacune des données originelles pour produire une pluralité décryptée de données originelles ;

la production d'une pluralité de données éditées, par le terminal d'utilisateur primaire (4), sous la forme d'une combinaison de données de processus d'édition et de la pluralité décryptée de données originelles, les données éditées impliquant un droit d'auteur secondaire pour le terminal d'utilisateur primaire (4) associé à l'édition des données originelles ;

l'envoi, à partir de ladite base de données, d'une autre clé secrète cryptée pour chacune de la pluralité de données éditées, au terminal d'utilisateur primaire (4) ;

le décryptage, par ledit terminal d'utilisateur (4), de l'autre clé secrète cryptée en utilisant une seconde clé privée ; et

le cryptage de la pluralité de données éditées en utilisant l'autre clé secrète décryptée pour chaque donnée éditée de la pluralité de données éditées avant mémorisation, copie et transfert de la pluralité de données éditées.

# FIG. 1

# FIG. 2